# EUROPÄISCHE PATENTSCHRIFT

(11) **EP 2 088 294 B1**
(45) Veröffentlichungstag und Bekanntmachung des Hinweises auf die Patenterteilung: **09.03.2011**
(21) Anmeldenummer: 09150513.1
(22) Anmeldetag: 14.01.2009
(51) Int. Cl.: F01N 13/18, F16L 51/04

(54) **Bauteilverbindung**
Component connection
Liaison de composants

(30) Priorität: 08.02.2008 DE 102008008352
(43) Veröffentlichungstag der Anmeldung: 12.08.2009
(73) Patentinhaber: J. Eberspächer GmbH & Co. KG, 73730 Esslingen (DE)
(72) Erfinder: Riekers, Ralf, 70182 Stuttgart (DE); Weiß, Michael, 73655 Plüderhausen (DE); Müller, Joachim, 72555 Metzingen (DE)
(74) Vertreter: BRP Renaud & Partner

(56) Entgegenhaltungen:
- EP-A- 0 009 496
- DE-B- 1 130 654

## Beschreibung

Die vorliegende Erfindung betrifft eine Verbindung zwischen zwei koaxial zueinander angeordneten ringförmigen Abschnitten zweier Bauteile einer thermisch hochbelasteten Einrichtung, insbesondere einer Abgasanlage einer Brennkraftmaschine, die insbesondere in einem Kraftfahrzeug angeordnet ist, gemäß dem Oberbegriff des Anspruchs 1. Die Erfindung betrifft außerdem eine mit wenigstens einer solchen Verbindung ausgestattete Abgasanlage.

Bei thermisch hochbelasteten Einrichtungen kann es zu Problemen kommen, wenn innerhalb der Einrichtung zwei Bauteile mit unterschiedlichen thermischen Ausdehnungskoeffizienten fest miteinander verbunden sind. Im Bereich dieser Verbindung können extrem hohe Spannungen auftreten, die zur Ermüdung und zum Versagen der Verbindung führen können. Derartige Probleme treten insbesondere auch bei Abgasanlagen von Brennkraftmaschinen auf, und zwar vor allem dann, wenn ein austenitisches Bauteil mit einem ferritischen Bauteil verbunden ist. Die Auswahl von Ferritmaterial einerseits und Austenitmaterial andererseits ergibt sich durch unterschiedliche Anforderungen bezüglich Temperaturbeständigkeit und Festigkeit des jeweiligen Bauteils. Von besonderem Interesse ist in vorliegendem Zusammenhang die Verbindung zwischen einem Abgaskrümmer und einem Abgasturbolader. Während der Abgaskrümmer bevorzugt aus einem Ferritmaterial besteht, wird für ein Gehäuse des Turboladers bevorzugt ein Austenitmaterial gewählt.

Aus der DE 11 30 654 B ist eine wärmeisolierte Durchführung eines Rohrs durch eine Wandöffnung bekannt, wobei eine die Wandöffnung durchsetzende Hülse mit einem Öffnungsrand verschraubt ist und ein erstes Bauteil bildet, während das Rohr die Hülse koaxial durchsetzt und dabei ein zweites Bauteil bildet. Beide Bauteile besitzen insoweit je einen ringförmigen Abschnitt. Koaxial zwischen diesen ringförmigen Abschnitten ist bei der bekannten Wanddurchführung ein ringförmiger Verbindungskörper angeordnet, der zwei konzentrisch zueinander angeordnete Ringabschnitte aufweist. Die beiden Ringabschnitte sind axial stirnseitig über einen Verbindungsbereich miteinander fest verbunden. Der erste Ringabschnitt ist über einen vom Verbindungsbereich entfernten ersten Anbindungsbereich mit dem ringförmigen Abschnitt des ersten Bauteils, also mit der Hülse fest verbunden, während der zweite Ringabschnitt über einen vom Verbindungsbereich entfernten zweiten Anbindungsbereich mit dem ringförmigen Abschnitt des zweiten Bauteils, also des Rohrs fest verbunden ist.

Aus der WO 79/00656 A1 ist ein mehrschaliger Rohrbogen bekannt, bei dem ein Innenrohr an seinem freien Ende mit einem Zwischenrohr verbunden ist, das sich unter Ausbildung eines Ringspalts koaxial zum Innenrohr erstreckt. Am freien Ende des Zwischenrohrs, das vom freien Ende des Innenrohrs entfernt ist, ist ein Außenrohr befestigt, das sich unter Ausbildung eines zweiten Ringspalts koaxial zum Innenrohr und zum Zwischenrohr erstreckt.

Die vorliegende Erfindung beschäftigt sich mit dem Problem, für eine Verbindung der eingangs genannten Art bzw. für eine damit ausgestattete Abgasanlage eine verbesserte Ausführungsform anzugeben, die sich insbesondere dadurch auszeichnet, dass sie eine vergleichsweise hohe Dauerfestigkeit aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Verbindung zwischen den zwei koaxialen ringförmigen Abschnitten der beiden Bauteile mit Hilfe eines ringförmigen Verbindungskörpers zu realisieren, der zumindest zwei konzentrische Ringabschnitte aufweist. Bei genau zwei Ringabschnitten sind diese axial stirnseitig über einen Verbindungsbereich miteinander fest verbunden und axial beabstandet davon sind sie jeweils mit einem der ringförmigen Abschnitte der Bauteile fest verbunden. Diese Verbindungstechnik ermöglicht innerhalb der Verbindung radiale Bewegungen zwischen den jeweiligen ringförmigen Anschlussabschnitten der beiden Bauteile relativ zueinander, wobei die beiden Ringabschnitte und/oder der Verbindungsbereich elastisch nachgeben und dabei wie eine Radialfeder wirken. Gleichzeitig stellt der Verbindungskörper in axialer Richtung eine vergleichsweise steife oder starre Verbindung zwischen den Anschlussabschnitten der Bauteile zur Verfügung, wodurch die erforderlichen Axialkräfte übertragbar sind. Durch die Federelastizität in radialer Richtung können thermisch bedingte Spannungen im Verbindungskörper elastisch aufgenommen werden. Die Dauerhaltbarkeit der Verbindung ist dadurch relativ groß.

Entsprechend der Erfindung weist der Verbindungskörper zumindest einen Abschnitt oder Bereich auf, dessen Temperaturausdehnungskoeffizient zwischen den Temperaturausdehungskoeffizienten eines Ferritmaterials und eines Austenitmaterials liegt. Diese Bauweise ist dann von Vorteil, wenn entsprechend der Erfindung eines der beiden Bauteile zumindest im Bereich seines ringförmigen Anschlussabschnitts ferritisch ist, während das andere Bauteil zumindest im Bereich seines ringförmigen Anschlussabschnitts austenitisch ist. Der Verbindungskörper und somit die gesamte Verbindung wird bei einer derartigen Konfiguration weniger thermisch belastet, was vorteilhaft für die Dauerfestigkeit der Verbindung ist.

Grundsätzlich kann der Verbindungskörper durch einen aus einem Stück hergestellten Blechformkörper gebildet werden. Ein derartiger Blechformkörper ist vergleichsweise preiswert herstellbar. Insbesondere kann dieser Blechformkörper aus einem Duplexmaterial hergestellt sein. Unter einem Duplexmaterial, vorzugsweise ein Stahl, wird ein Material verstanden, das ein zweiphasiges Gefüge aufweist, nämlich eine Ferritphase und eine Austenitphase. Insbesondere besteht ein derartiges Zweiphasenmaterial aus einer Ferritmatrix, in die Austenitinseln eingelagert sind.

Alternativ kann es sich beim Verbindungskörper um ein gebautes Bauteil handeln, bei dem die beiden Ringabschnitte separate Komponenten bilden, die über den Verbindungsbereich fest miteinander verbunden sind. Ein derartiger gebauter Verbindungskörper lässt sich besonders geschickt durch geeignete Materialauswahl für die einzelnen Bestandteile an die jeweiligen Einsatzbedingungen anpassen, wodurch für die Verbindung besonders hohe Werte für die Dauerfestigkeit erzielbar sind.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

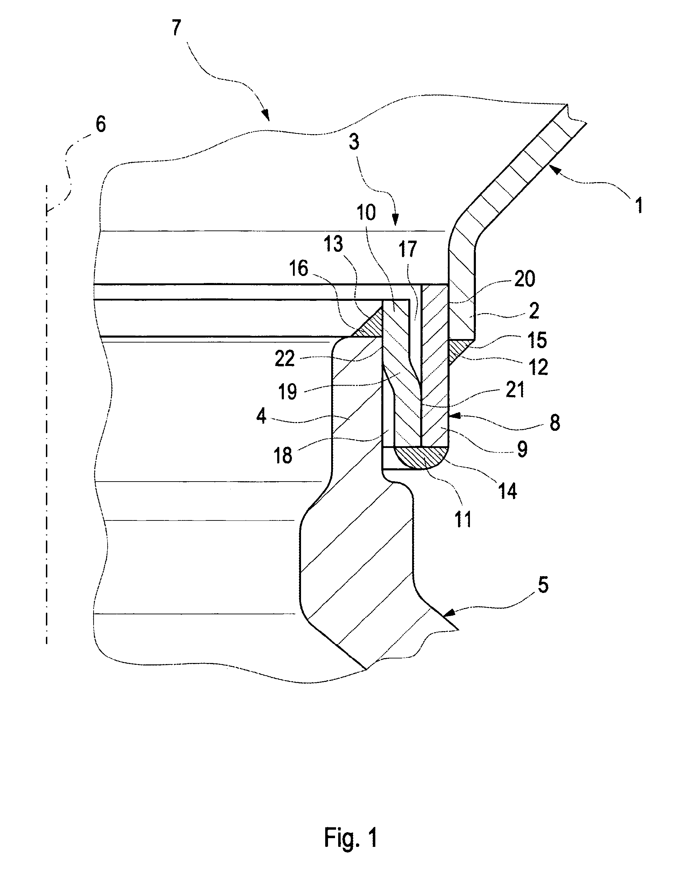

Die einzige Fig. 1 zeigt schematisch eine stark vereinfachte, prinzipielle Schnittansicht einer Abgasanlage im Bereich einer Verbindung.

Entsprechend Fig. 1 kann ein nur teilweise dargestelltes erstes Bauteil 1 im Bereich eines ringförmigen ersten Abschnitts 2, der im folgenden auch als erster Anschlussabschnitt 2 bezeichnet wird, mit Hilfe einer Verbindung 3 an einem ringförmigen zweiten Abschnitt 4, der im folgenden auch als zweiter Anschlussabschnitt 4 bezeichnet, an einem hier nur teilweise darstellten zweiten Bauteil 5 befestigt werden. Die ringförmigen Anschlussabschnitte 2, 4 erstrecken sich dabei bezüglich einer Längsachse 6 ringförmig bzw. in Umfangsrichtung, wobei die Längsachse 6 gleichzeitig eine Axialrichtung definiert, die sich parallel zur Längsachse 6 erstreckt. Die "Ringform" umfasst dabei zumindest kreisförmige, elliptische und ovale Querschnitte. Die beiden Bauteile 1 und 5 sind bevorzugt, jedoch ohne Beschränkung der Allgemeinheit, jeweils Bestandteil einer im übrigen nicht dargestellten Abgasanlage 7 einer Brennkraftmaschine, die sich insbesondere in einem Fahrzeug befinden kann. Im einzelnen kann es sich beim ersten Bauteil 1 um einen Abgaskrümmer handeln, während es sich beim zweiten Bauteil 5 beispielsweise um ein Gehäuse eines Abgasturboladers handeln kann. Der Abgaskrümmer 1 und der Abgasturbolader 5 sind über die Verbindung 3 aneinander befestigt. Sofern der Abgaskrümmer 1 als luftspaltisolierter Abgaskrümmer mit Innenschale und Außenschale ausgestaltet ist, kann der Abgasturbolader 5 bzw. dessen Gehäuse über die Verbindung 3 nur mit der Innenschale oder nur mit der Außenschale oder sowohl mit der Innen- als auch mit der Außenschale verbunden sein.

Die Verbindung 3 umfasst einen ringförmigen Verbindungskörper 8, über den die beiden Bauteile 1, 5 aneinander befestigt sind. Der Verbindungskörper 8 weist hierzu einen ersten Ringabschnitt 9 sowie einen zweiten Ringabschnitt 10 auf. Grundsätzlich können auch mehr als zwei Ringabschnitte vorgesehen sein. Die Ringabschnitte 9, 10 sind hülsenförmig oder zylindrisch, insbesondere kreiszylindrisch, ausgestaltet und erstrecken sich koaxial zur Längsachse 6 und konzentrisch zueinander bzw. ineinander. Vorzugsweise ist dabei der ersten Ringabschnitt 9 radial außen angeordnet, während der zweite Ringabschnitt 10 relativ dazu radial innen angeordnet ist. Die beiden Ringabschnitte 9, 10 sind axial stirnseitig über einen Verbindungsbereich 11 fest miteinander verbunden. Hierzu ist der Verbindungsbereich 11 jeweils mit einem axialen Ende des jeweiligen Ringabschnitts 9, 10 stirnseitig fest verbunden. Des weiteren ist der erste Ringabschnitt 9 über einen ersten Anbindungsbereich 12, der vom Verbindungsbereich 11 axial beabstandet ist, mit dem ersten Anbindungsabschnitt 2 des ersten Bauteils 1 fest verbunden. Im Unterschied dazu ist der zweite Ringabschnitt 10 über einen zweiten Anbindungsbereich 13, der vom Verbindungsbereich 11 axial beabstandet ist, mit dem zweiten Anbindungsabschnitt 4 des zweiten Bauteils 5 fest verbunden. Da die Anbindungsbereiche 12, 13 axial vom Verbindungsbereich 11 entfernt sind, kann der Verbindungskörper 8 wie eine Radialfeder wirken. Die beiden Ringabschnitte 9, 10 bilden dabei Federschenkel, die über den Verbindungsbereich 11 aneinander festgelegt sind. Die Federwirkung wird dabei durch elastische Biegeverformungen im Bereich der Ringabschnitte 9, 10 und/oder im Bereich des Verbindungsbereichs 11 realisiert.

Bei mehr als zwei Ringabschnitten 9,10 gibt es somit wenigstens einen mittleren Ringabschnitt sowie den ersten Ringabschnitt 9 und den zweiten Ringabschnitt 10 als äußere Ringabschnitte 9,10. Dieser mittlere Ringabschnitt bzw. je ein mittlerer Ringabschnitt ist dann axial einenends über einen solchen Verbindungsbereich 11 fest mit einem der beiden äußeren Ringabschnitte 9 bzw. 10 verbunden, während er axial anderenends ebenfalls über einen solchen Verbindungsbereich 11 fest mit dem jeweils anderen äußeren Ringabschnitt 9,10 oder mit einem gegebenenfalls vorhandenen weiteren mittleren Ringabschnitt verbunden ist.

Bevorzugt besteht der Verbindungskörper 8 vollständig oder zumindest teilweise aus einem Material, dessen Temperaturausdehnungskoeffizient zwischen dem Temperaturausdehnungskoeffizienten eines Ferritmaterials und dem Temperaturausdehnungskoeffizienten eines Austenitmaterials liegt. Bevorzugt liegt der Temperaturausdehnungskoeffizient des Verbindungskörpers 8 in einem mittleren Bereich eines Intervalls, das durch die Temperaturausdehnungskoeffizienten von Ferrit und Austenit begrenzt ist. Die Verwendung eines derartigen Verbindungskörpers 8 ist insbesondere dann von Vorteil, wenn das eine Bauteil 1 oder 2 ferritisch ist, während das andere Bauteil 1 oder 2 austenitisch ist. Im hier gezeigten, bevorzugten Beispiel ist das erste Bauteil 1, also insbesondere der Abgaskrümmer 1 ferritisch, während das zweite Bauteil 5, also insbesondere das Turboladergehäuse austenitisch ist. Es ist klar, dass das erste Bauteil 1 grundsätzlich nur im Bereich seines ersten Anschlussabschnitts 2 ferritisch sein muss. Ebenso muss auch das zweite Bauteil 5 grundsätzlich nur im Bereich seines zweiten Anschlussabschnitts 4 austenitisch sein. Bei einer derartigen Konfiguration lässt sich die Dauerfestigkeit der Verbindung 3 durch die Verwendung des mit einem mittleren Temperaturausdehnungskoeffizienten versehenen Verbindungskörpers 8 steigern.

Bei der hier gezeigten, bevorzugten Ausführungsform ist der Verbindungskörper 8 aus mehreren separat hergestellten Komponenten zusammengebaut, so dass im folgenden auch von einem gebauten Verbindungskörper 8 gesprochen werden kann. Beim gebauten Verbindungskörper 8 sind zumindest zwei Ringabschnitte 9, 10 durch separat hergestellte Ringkörper gebildet, die über einen solchen Verbindungsbereich 11 miteinander fest verbunden sind. Hierzu kann es sich beim Verbindungsbereich 11 um eine Schweißnaht 14 handeln. Diese Schweißnaht 14 wird dabei bevorzugt mit einem Austenitmaterial oder mit einem Duplexmaterial hergestellt. Von besonderem Vorteil ist dabei, dass sich der Verbindungsbereich 11 radial außen befindet, also an einer vergleichsweise kalten Seite der Verbindung. Die thermische Belastung dieses Verbindungsbereichs 11 ist daher gegenüber einer innen liegenden Anordnung reduziert.

Beim gebauten Verbindungskörper 8 besteht der am ersten Bauteil 1 befestigte Ringabschnitt, also hier der erste Ringabschnitt 9 bevorzugt aus einem Duplexmaterial. Alternativ kann der erste Ringabschnitt 9 auch aus einem Ferritmaterial oder aus einer Nickelbasislegierung hergestellt werden. Die Nickelbasislegierung zeichnet sich durch eine erhöhte Korrosionsbeständigkeit sowie durch eine besonders hohe Temperaturfestigkeit aus. Die Nickelbasislegierung hat bevorzugt einen relativ hohen Nickelanteil. Sie besitzt einen gegenüber Austenit geringeren und gegenüber Ferrit erhöhten Temperaturausdehnungskoeffizienten. Bevorzugt wird eine Nickelbasislegierung mit der Handelsbezeichnung Inconel.

Beim gebauten Verbindungskörper 8 besteht der am zweiten Bauteil 5 befestigte Ringabschnitt, also hier der zweite Ringabschnitt 10 bevorzugt aus einem Austenitmaterial. Alternativ kann auch der zweite Ringabschnitt 10 aus einem Duplexmaterial bestehen.

Alternativ zur gebauten Variante ist grundsätzlich auch eine Ausführungsform denkbar, bei welcher der Verbindungskörper 8 aus einem Stück hergestellt ist, wobei der Verbindungskörper 8 bevorzugt als Blechformkörper ausgestaltet ist. Dieser einteilige oder integral hergestellte Verbindungskörper 8 kann beispielsweise durch Umformung eines entsprechenden scheibenförmigen Rohlings hergestellt werden. Dieser integrale Verbindungskörper 8 kann beispielsweise aus Duplexmaterial bestehen.

Unabhängig davon, ob der Verbindungskörper 8 aus einem Stück hergestellt oder aus mehreren Bestandteilen zusammengebaut ist, können die Anbindungsbereiche 12 und 13 jeweils durch eine Schweißnaht 15 bzw. 16 gebildet sein. Bevorzugt ist dabei die Schweißnaht 15 des ersten Anbindungsbereichs 12 mit Hilfe eines Duplexmaterials hergestellt. Alternativ ist grundsätzlich auch die Verwendung eines ferritischen Schweißmaterials möglich. Auch dieser erste Anbindungsbereich 12 befindet sich radial außen und ist somit einer reduzierten thermischen Belastung ausgesetzt. Die Schweißnaht 16 des zweiten Anbindungsbereichs 13 ist bevorzugt mittels eines Austenitmaterials hergestellt. Sie befindet sich radial innen und benötigt daher eine erhöhte thermische Festigkeit. Alternativ ist auch hier grundsätzlich die Verwendung eines Duplexmaterials möglich.

Bevorzugt ist bei einem ersten Bauteil 1 aus Ferritmaterial der erste Ringabschnitt 9 auch aus Ferritmaterial oder aus Duplexmaterial oder aus einer Nickelbasislegierung, während bei einem zweiten Bauteil 5 aus Austenitmaterial der zweite Ringabschnitt 10 auch aus Austenitmaterial oder aus Duplexmaterial besteht. Die Schweißverbindung 12 ist dann zweckmäßig mit Duplexmaterial gebildet, während die Schweißverbindung 15 aus Ferritmaterial oder Duplexmaterial besteht und die Schweißverbindung 16 aus Austenitmaterial oder Duplexmaterial besteht.

Besonders vorteilhaft ist die hier gezeigte Ausgestaltung des Verbindungskörpers 8, bei dem radial zwischen den beiden Ringabschnitten 9, 10 ein Ringspalt 17 ausgebildet ist. Dieser Ringspalt 17 realisiert eine thermische Spaltisolierung zwischen den beiden Ringabschnitten 9, 10, wodurch die Wärmeübertragung zwischen den beiden Bauteilen 1, 5 reduziert ist. Zusätzlich oder alternativ kann radial zwischen dem zweiten Ringabschnitt 10 und dem zweiten Anschlussabschnitt 4 ein Ringspalt 18 ausgebildet sein. Auch dieser Ringspalt 18 realisiert eine thermische Spaltisolation, welche die Wärmeübertragung zwischen den beiden Bauteilen 1, 5 reduziert. Zusätzlich oder alternativ kann auch radial zwischen dem ersten Ringabschnitt 9 und dem ersten Anschlussabschnitt 2 ein Ringspalt ausgebildet sein, was im gezeigten Beispiel jedoch nicht vorgesehen ist.

Zur Realisierung der hier gezeigten Ringspalte 17, 18 ist der zweite Ringabschnitt 10 gestuft ausgebildet, so dass er zumindest zwei Axialabschnitte aufweist. Der in Fig. 1 unten dargestellte untere Axialabschnitt ist über einen Versatzbereich 19 mit dem in Fig. 1 oben dargestellten oberen Axialabschnitt verbunden. Der Innendurchmesser des unteren Axialabschnitts ist größer als der Innendurchmesser des oberen Axialabschnitts, wodurch der Ringspalt 17 realisierbar ist. Des weiteren ist der Außendurchmesser des unteren Axialabschnitts größer als der Außendurchmesser des oberen Axialabschnitts, wodurch der Ringspalt 18 realisiert wird. Abgesehen vom Versatzbereich 19 erstreckt sich der zweite Ringabschnitt 10 im Profil geradlinig. Ebenso erstreckt sich der erste Ringabschnitt 9 hier im gesamten Profil geradlinig. Hierdurch entstehen flächige Kontaktzonen, nämlich eine erste Kontaktzone 20, in welcher der erste Ringabschnitt 9 flächig am ersten Anschlussabschnitt 2 radial anliegt, eine zweite Kontaktzone 21, in welcher die beiden Ringabschnitte 9, 10 flächig radial aneinander anliegen, sowie eine dritte Kontaktzone 22, in welcher der zweite Ringabschnitt 10 flächig am zweiten Anschlussabschnitt 4 radial anliegt.

Die in radialer Richtung gemessene Spaltweite des jeweiligen Spalts 17, 18 ist dabei kleiner als eine in radialer Richtung gemessene Wandstärke des ersten Ringabschnitts 9 oder des zweiten Ringabschnitts 10. Bevorzugt weisen beide Ringabschnitte 9, 10 etwa gleiche Wandstärken auf. Im Beispiel weisen die beiden Ringabschnitte 9, 10 etwa gleiche axiale Längen auf. Der jeweilige Ringspalt 17, 18 erstreckt sich bevorzugt axial über 50 % des jeweiligen Ringabschnitts 9, 10. Die Kontaktzonen 20, 21, 22 erstrecken sich bevorzugt jeweils etwa über 50 % des jeweiligen Ringabschnitts 9, 10.

Die hier vorgestellte Verbindung 3 reduziert in erheblichem Maße den Wärmeübergang zwischen den beiden Bauteilen 1,5, da die Wärme hierzu über den Verbindungskörper 8 geleitet wird, was insbesondere durch die Ringspalte 17,18 erschwert ist.

## Patentansprüche

1. Verbindung zwischen zwei koaxial zueinander angeordneten, ringförmigen Abschnitten (2, 4) von zwei Bauteilen (1, 5) einer thermisch hochbelasteten Einrichtung, insbesondere einer Abgasanlage (7) einer Brennkraftmaschine, die insbesondere in einem Kraftfahrzeug angeordnet ist,
- mit einem ringförmigen Verbindungskörper (8), der zumindest zwei konzentrisch zueinander angeordnete Ringabschnitte (9, 10) aufweist,
- wobei zwei dieser Ringabschnitte (9, 10) axial stirnseitig über einen Verbindungsbereich (11) miteinander fest verbunden sind,
- wobei ein erster dieser Ringabschnitte (9) über einen vom Verbindungsbereich (11) entfernten ersten Anbindungsbereich (12) mit dem ringförmigen Abschnitt (2) des ersten Bauteils (1) fest verbunden ist,
- wobei ein zweiter dieser Ringabschnitte (10) über einen vom Verbindungsbereich (11) entfernten zweiten Anbindungsbereich (13) mit dem ringförmigen Abschnitt (4) des zweiten Bauteils (5) fest verbunden ist,
**dadurch gekennzeichnet,**
- **dass** das eine Bauteil (1, 5) zumindest im Bereich seines ringförmigen Abschnitts (2, 4) aus Ferritmaterial besteht, während das andere Bauteil (1, 5) zumindest im Bereich seines ringförmigen Abschnitts (2, 3) aus Austenitmaterial besteht,
- **dass** der Verbindungskörper (8) vollständig oder zumindest in einem Abschnitt (9, 10, 11) oder Bereich (9, 10, 11) einen Temperaturausdehnungskoeffizienten aufweist, der zwischen den Temperaturausdehnungskoeffizienten des Ferritmaterials und des Austenitmaterials liegt.

2. Verbindung nach Anspruch 1,
**dadurch gekennzeichnet,**
**dass** der erste Anbindungsbereich (12) durch eine Schweißnaht (15) gebildet ist, die insbesondere aus einem Duplexmaterial oder aus einem Ferritmaterial bestehen kann.

3. Verbindung nach Anspruch 1 oder 2,
**dadurch gekennzeichnet,**
**dass** der zweite Anbindungsbereich (13) durch eine Schweißnaht (16) gebildet ist, die insbesondere aus einem Austenitmaterial oder aus einem Duplexmaterial bestehen kann.

4. Verbindung nach einem der Ansprüche 1 bis 3,
**dadurch gekennzeichnet,**
**dass** der Verbindungsbereich (11) durch eine Schweißnaht (14) gebildet ist, die insbesondere aus einem Austenitmaterial oder aus einem Duplexmaterial bestehen kann.

5. Verbindung nach einem der Ansprüche 1 bis 4,
**dadurch gekennzeichnet,**
**dass** der erste Ringabschnitt (9) aus einem Duplexmaterial oder aus einem Ferritmaterial oder aus einer Nickelbasislegierung besteht.

6. Verbindung nach einem der Ansprüche 1 bis 5,
**dadurch gekennzeichnet,**
**dass** der zweite Ringabschnitt (10) aus einem Austenitmaterial oder aus einem Duplexmaterial besteht.

7. Verbindung nach einem der Ansprüche 1 bis 3,
**dadurch gekennzeichnet,**
**dass** der Verbindungskörper (8) ein aus einem Stück hergestellter Blechformkörper ist, der insbesondere aus Duplexmaterial bestehen kann.

8. Verbindung nach einem der Ansprüche 1 bis 7,
**dadurch gekennzeichnet,**
**dass** radial zwischen den beiden Ringabschnitten (9, 10) ein Ringspalt (17) ausgebildet ist.

9. Verbindung nach einem der Ansprüche 1 bis 8,
**dadurch gekennzeichnet,**
**dass** zumindest bei einem der Ringabschnitte (9, 10) radial zwischen dem jeweiligen Ringabschnitt (10) und dem daran befestigten ringförmigen Abschnitt (4) des jeweiligen Bauteils (5) ein Ringspalt (18) ausgebildet ist.

10. Verbindung nach einem der Ansprüche 1 bis 9,
**dadurch gekennzeichnet,**
**dass** konzentrisch zwischen dem ersten Ringabschnitt (9) und dem zweiten Ringabschnitt (10) wenigstens ein weiterer Ringabschnitt angeordnet ist, der axial einenends über einen solchen Verbindungsbereich (11) mit dem ersten Ringabschnitt (9) und axial anderenends über einen solchen Verbindungsbereich (11) mit dem zweiten Ringabschnitt (10) oder mit einem weiteren Ringabschnitt fest verbunden ist.

11. Abgasanlage für eine Brennkraftmaschine, insbesondere in einem Kraftfahrzeug, mit wenigstens zwei Bauteilen (1, 5), die über eine Verbindung (3) nach einem der Ansprüche 1 bis 10 miteinander verbunden sind.

## Claims

1. A connection between two annular sections (2, 4) of two components (1, 5) of a device subjected to high thermal stresses that are arranged coaxial to one another, particularly of an exhaust system (7) of an internal combustion engine that is installed, in particular, in a motor vehicle,
- with an annular connecting element (8) that features at least two concentric ring sections (9, 10),
- wherein two of these ring sections (9, 10) are axially connected to one another in a rigid fashion on the face side by means of a connecting region (11),
- wherein a first ring section (9) is rigidly connected to the annular section (2) of the first component (1) by means of a first connecting region (12) that is spaced apart from the connecting region (11)
- wherein a second ring section (10) is rigidly connected to the annular section (4) of the second component (5) by means of a second connecting region (13) that is spaced apart from the connecting region (11),
**characterized in**
- **that** the one component (1, 5) consists of a ferrite material at least in the region of its annular section (2, 4), while the other component (1, 5) consists of an austenite material at least in the region of its annular section (2, 3),
- **that** the entire connecting element (8) or at least a section (9, 10, 11) or region (9, 10, 11) thereof has a coefficient of thermal expansion that lies between the coefficients of thermal expansion of the ferrite material and the austenite material.

2. The connection according to Claim 1,
**characterized in**
**that** the first connecting region (12) is realized in the form of a welding seam (15) that may consist, in particular, of a duplex material or of a ferrite material.

3. The connection according to Claim 1 or 2,
**characterized in**
**that** the second connecting region (13) is realized in the form of a welding seam (16) that may consist, in particular, of an austenite material or of a duplex material.

4. The connection according to one of Claims 1 to 3,
**characterized in**
**that** the connecting region (11) is realized in the form of a welding seam (14) that may consist, in particular, of an austenite material or of a duplex material.

5. The connection according to one of Claims 1 to 4,
**characterized in**
**that** the first ring section (9) consists of a duplex material or of a ferrite material or of a nickel-based alloy.

6. The connection according to one of Claims 1 to 5,
**characterized in**
**that** the second ring section (10) consists of an austenite material or of a duplex material.

7. The connection according to one of Claims 1 to 3,
**characterized in**
**that** the connecting element (8) is realized in the form of a preformed sheet metal element that is manufactured in one piece and may consist, in particular, of a duplex material.

8. The connection according to one of Claims 1 to 7,
**characterized in**
**that** an annular gap (17) is formed radially between the two ring sections (9, 10).

9. The connection according to one of Claims 1 to 8,
**characterized in**
**that** an annular gap (18) is formed on at least one of the ring sections (9, 10) radially between the respective ring section (10) and the annular section (4) of the respective component (5) fixed thereon.

10. The connection according to one of Claims 1 to 9,
**characterized in**
**that** at least one other ring section is arranged concentrically between the first ring section (9) and the second ring section (10), wherein one end of this other ring section is axially connected to the first ring section (9) in a rigid fashion by means of such a connecting region (11) and its other end is axially connected to the second ring section (10) or to another ring section in a rigid fashion by means of such a connecting region (11).

11. An exhaust system for an internal combustion engine, particularly in a motor vehicle, with at least two components (1, 5) that are connected to one another by means of a connection (3) according to one of Claims 1 to 10.

## Revendications

1. Liaison entre deux tronçons (2, 4) de forme annulaire, disposés de façon coaxiale l'un par rapport à l'autre, de deux composants (1, 5) d'un dispositif pouvant être fortement sollicité thermiquement, en particulier d'une installation d'échappement (7) d'un moteur à combustion interne, qui est disposée en particulier sur un véhicule automobile,
- comprenant un corps de liaison (8) de forme annulaire, qui présente au moins deux tronçons annulaires (9, 10) disposés de façon concentrique l'un par rapport à l'autre,
- deux de ces tronçons annulaires (9, 10) étant reliés fixement l'un à l'autre axialement sur le côté avant par une zone de liaison (11),
- un premier de ces tronçons annulaires (9) étant relié fixement au moyen d'une première zone de raccordement (12) éloignée de la zone de liaison (11) au tronçon (2) annulaire du premier composant (1),
- un second de ces tronçons annulaires (10) étant relié fixement au moyen d'une seconde zone de raccordement (13) éloignée de la zone de liaison (11) au tronçon (4) annulaire du second composant (5),
**caractérisée en ce que**
- l'un des composants (1, 5) est à base de matériau ferritique au moins dans la zone de son tronçon (2, 4) annulaire, alors que l'autre composant (1, 5) est à base de matériau austénitique au moins dans la zone de son tronçon (2, 3) annulaire,
- **en ce que** le corps de liaison (8) présente complètement ou au moins dans un tronçon (9, 10, 11) ou dans une zone (9, 10, 11) un coefficient de dilatation de température qui se situe entre le coefficient de dilatation de température du matériau ferritique et celui du matériau austénitique.

2. Liaison selon la revendication 1,
**caractérisée en ce que**
la première zone de raccordement (12) est formée par un cordon de soudure (15) qui peut être en particulier à base d'un matériau duplex ou d'un matériau ferritique.

3. Liaison selon la revendication 1 ou 2,
**caractérisée en ce que**
la seconde zone de raccordement (13) est formée par un cordon de soudure (16) qui peut être en particulier à base d'un matériau austénitique ou à base d'un matériau duplex.

4. Liaison selon l'une quelconque des revendications 1 à 3,
**caractérisée en ce que**
la zone de liaison (11) est formée par un cordon de soudure (14) qui peut être en particulier à base d'un matériau austénitique ou à base d'un matériau duplex.

5. Liaison selon l'une quelconque des revendications 1 à 4,
**caractérisée en ce que**
le premier tronçon annulaire (9) est à base d'un matériau duplex ou d'un matériau ferritique ou d'un alliage de base de nickel.

6. Liaison selon l'une quelconque des revendications 1 à 5,
**caractérisée en ce que**
le second tronçon annulaire (10) est à base d'un matériau austénitique ou à base d'un matériau duplex.

7. Liaison selon l'une quelconque des revendications 1 à 3,
**caractérisée en ce que**
le corps de liaison (8) est un corps moulé en tôle fabriqué d'une seule pièce, qui peut être en particulier à base de matériau duplex.

8. Liaison selon l'une quelconque des revendications 1 à 7,
**caractérisée en ce que**
une fente annulaire (17) est formée radialement entre les deux tronçons annulaires (9, 10).

9. Liaison selon l'une quelconque des revendications 1 à 8,
**caractérisée en ce que**
une fente annulaire (18) est conçue, au moins sur l'un des tronçons annulaires (9, 10), radialement entre le tronçon annulaire (10) concerné et le tronçon (4) annulaire fixé dessus du composant (5) concerné.

10. Liaison selon l'une quelconque des revendications 1 à 9,
**caractérisée en ce que**
entre le premier tronçon annulaire (9) et le second tronçon annulaire (10) est disposé de façon concentrique au moins un autre tronçon annulaire, qui est relié fixement axialement par une extrémité au moyen d'une telle zone de liaison (11) au premier tronçon annulaire (9) et axialement sur l'autre extrémité par une telle zone de liaison (11) au second tronçon annulaire (10) ou à un autre tronçon annulaire.

11. Installation d'échappement pour un moteur à combustion interne, en particulier sur un véhicule automobile, comprenant au moins deux composants (1, 5), qui sont reliés l'un à l'autre par une liaison (3) selon l'une quelconque des revendications 1 à 10.
